# FASCICULE DE BREVET EUROPEEN

(11) **EP 1 200 941 B1**
(45) Date de publication et mention de la délivrance du brevet: **21.02.2007**
(21) Numéro de dépôt: 00949614.2
(22) Date de dépôt: 03.07.2000
(51) Int. Cl.: G07F 7/10

(54) **TERMINAL INFORMATIQUE PORTABLE DE VENTE POUR LA REALISATION DE TRANSACTIONS FINANCIERES ET COMMERCIALES SUR UN POINT DE VENTE**
TRAGBARES RECHNERGESTÜTZTES VERKAUFSTERMINAL ZUM DURCHFÜHREN VON FINANZIELLEN UND GESCHÄFTLICHEN TRANSAKTIONEN
PORTABLE COMPUTERISED SALES TERMINAL FOR CARRYING OUT FINANCIAL AND COMMERCIAL TRANSACTIONS AT A SALES OUTLET

(30) Priorité: 01.07.1999 FR 9908665
(43) Date de publication de la demande: 02.05.2002
(73) Titulaire: WYNID TECHNOLOGIES, 34980 Saint Clément de Rivière (FR)
(72) Inventeur: TRIAL, François, F-34130 Saint-Aunes (FR); WELMANT, Bernard, F-30110 Grand Combe (FR)
(74) Mandataire: Esselin, Sophie
(86) Numéro de dépôt international: PCT/FR2000/001890
(87) Numéro de publication internationale: WO 2001/003085

(56) Documents cités:
- EP-A- 0 546 584
- EP-A- 0 940 783
- WO-A-98/15929
- WO-A-98/41949
- US-A- 4 084 214
- US-A- 5 679 943
- US-A- 5 742 526

## Description

La présente invention a pour objet un terminal informatique portable de vente pour la réalisation de transactions financières et commerciales sur un point de vente.

Les points de vente sont pour la plupart équipés de terminaux informatiques permettant de réaliser et d'enregistrer les opérations financières et commerciales effectuées par l'intermédiaire de moyens de paiement divers.

Ces terminaux informatiques de vente comportent ainsi un clavier, un écran d'affichage, un lecteur de carte à mémoire, magnétique et/ou à puce, un lecteur de piste de chèque, une imprimante et au moins une interface de communication.

Pour plus de commodité pour les utilisateurs, ces terminaux informatiques de vente ont été miniaturisés en sorte d'être portables. Ils sont ainsi aisément accessibles aux clients, qui peuvent reconnaître leur moyen de paiement puis, éventuellement, composer un code sur le clavier pour valider l'opération. La transaction est ensuite transmise à un centre de paiement, éventuellement via une base intermédiaire.

Or, un tel terminal informatique portable de vente, selon l'usage auquel il est destiné, c'est-à-dire, par exemple, selon le type de commerce où il est utilisé, ne nécessite pas forcément l'intégralité des périphériques disponibles, dont les plus fréquents ont été précédemment cités. Aussi, il est proposé de nombreux modèles de terminaux informatiques qui diffèrent par le nombre et la combinaison de périphériques que chacun présente.

Les terminaux informatiques portables de vente comportent tous un clavier, un écran d'affichage et un lecteur de carte à mémoire, tandis que les périphériques tels que l'imprimante, le lecteur de piste de chèques bancaires, et les divers moyens de transfert de données, sont optionnels.

Ces différentes configurations créent des problèmes de fabrication puisqu'elles conduisent à prévoir des modèles différents selon les souhaits du commerçant.

Pour pallier cet inconvénient il a été proposé divers terminaux informatiques portables de vente.

Ainsi, par le document WO 98/41949, on connaît un terminal de vente pour la lecture de cartes à puce qui se présente sous forme d'un boîtier à l'intérieur duquel est disposée, de manière démontable, une carte mère au-dessus de laquelle prend position une carte de communication, par exemple un modem, permettant à l'appareil de transmettre ou recevoir des données depuis l'extérieur. Dans ce boîtier peut encore prendre position un dispositif d'impression, plus particulièrement au niveau d'un logement prédéfini dans ce boîtier.

Le boîtier de ce terminal présente donc une modularité, mais qui ne réside que dans le fait que dans un boîtier de configuration prédéfinie l'on puisse choisir de l'équiper ou non de certains composants. La liste de ces derniers est dans, ce cas, nécessairement très limitée et définitivement figée dès la conception du boîtier. Par ailleurs, l'utilisateur qui peut se contenter d'un terminal dépourvu d'un périphérique d'impression se voit, malgré tout, dans l'obligation de manipuler un appareil aux dimensions identiques à un autre pourvu d'un tel périphérique.

On connaît également par le document WO 98 15929, un terminal de lecture de carte à puce muni de moyens d'impression, lequel terminal se présente sous forme d'un boîtier indépendant comportant sur sa face avant un écran d'affichage, ainsi qu'un clavier. Par ailleurs, en partie avant il comporte une fente d'introduction d'une carte à mémoire, tandis qu'un périphérique d'impression prolonge ce boîtier en partie arrière. Il peut encore être raccordé à ce boîtier indépendant un lecteur de carde à puce auxiliaire qui ne fait, par conséquent, que dédoubler cette fonction de lecture de carte à puce déjà existante au niveau du terminal. Aussi, la carte mère, que renferme cet appareil, ne nécessite aucune adaptation spécifique par rapport à un tel lecteur auxiliaire. De même, le périphérique d'impression est installé à demeure sur le terminal qui ne présente aucune modularité à ce niveau, de sorte que la carte mère est nécessairement pré équipée des moyens de gestion de ce périphérique.

Une autre solution est apportée par le document US 5 679 943 qui décrit un terminal portable modulaire pour la réception, le stockage et la transmission d'informations, et dans un mode de réalisation particulier, un terminal de paiement par carte à piste magnétique. Ce terminal comprend un unité de calcul, un clavier et un écran interchangeables, ainsi que des modules interchangeables offrant plusieurs utilisations et configurations matérielles possibles dudit terminal, comme lecteur de code à barres ou lecteur de cartes magnétiques.

Toutefois, des problèmes de gestion des modules par le terminal peuvent survenir, notamment l'encombrement de l'unité de calcul. De surcroît, cette solution prévoit une modularité de l'unité de calcul elle-même pour s'adapter aux modules utilisés par le commerçant et ainsi présenter l'inconvénient de diminuer l'efficacité de la modularité dudit terminal et augmenter son coût de revient.

La présente invention a pour but de remédier à ces divers inconvénients en proposant un terminal informatique portable de vente pour la réalisation de transactions financières et commerciales sur un point de vente, dont la fabrication est réalisée de manière modulaire.

Le terminal informatique portable de vente selon l'invention, comporte un boîtier incorporant une carte mère et comprenant un clavier, un écran d'affichage et un lecteur de carte à puce, et il se caractérise essentiellement en ce que ledit boîtier comporte d'une part des moyens de solidarisation permettant de lui adjoindre mécaniquement un module qui le prolonge matériellement et qui peut incorporer un ou plusieurs périphériques ainsi que les moyens de gestion du ou desdits périphériques, et d'autre part des moyens de connexion permettant de relier ladite carte mère auxdits moyens de gestion.

Le terminal informatique portable de vente selon l'invention comprend donc un boîtier comportant les périphériques indispensables à l'utilisateur que sont l'écran d'affichage, le clavier et le lecteur de carte à puce et bien entendu la carte mère, ainsi qu'un module, choisi parmi des modules qui diffèrent par la nature du périphérique ou de la combinaison des périphériques qu'ils comportent, et qui incorporent les moyens de gestion du ou des périphériques qu'ils renferment. Le module est apte, par l'intermédiaire des moyens de connexion, à être adapté au boîtier, pour ne former matériellement qu'un seul bloc, et en sorte que les moyens de gestion du ou de chacun des périphériques soient reliés à la carte mère dont il ne reste alors qu'à réaliser la programmation.

Le ou les périphériques incorporés dans un module peuvent avoir des fonctions très différentes telles que la lecture de piste magnétique d'une carte, la lecture de piste d'un chèque bancaire, l'impression et la transmission de données via une interface du type MODEM, GSM, infrarouge, ou filaire.

Par ailleurs, on notera que si les modules peuvent comporter une ou plusieurs interfaces de liaison, il est également possible que le boîtier principal comporte une telle interface de liaison connectée directement à la carte mère.

Selon une caractéristique additionnelle du terminal informatique portable selon l'invention, les moyens de solidarisation du module au boîtier consistent en des moyens d'encliquetage.

De manière avantageuse, la forme et les dimensions des modules et celles du boîtier, au niveau des zones destinées à être aboutées, sont identiques, en sorte de réaliser une continuité ne permettant pas de desceller de manière évidente la modularité de l'ensemble.

Selon une autre caractéristique additionnelle du terminal informatique portable selon l'invention, les moyens de connexion consistent en une carte périphérique apte à être mise en contact avec un connecteur.

Selon une autre caractéristique additionnelle du terminal informatique portable selon l'invention, le boîtier est de forme allongée le lecteur de carte à puce est disposé à l'extrémité avant du boîtier tandis que les moyens solidarisation et de connexion du module sont disposés à l'extrémité arrière.

Selon une autre caractéristique additionnelle du terminal informatique portable selon l'invention, le module comporte des moyens de connexion, lesquels sont disposés à l'arrière dudit module.

Ces moyens de connexion, tels qu'une liaison filaire de transmission de données ou une alimentation en énergie électrique, sont disposés à l'arrière des modules afin de faciliter la manipulation du terminal.

On notera qu'il est possible que les moyens de connexion qui concernent l'alimentation en énergie électrique soient disposés sur le boîtier, en sorte de prévoir une base de chargement standard quelle que soit la configuration du terminal, c'est-à-dire quel que soit le module assujetti au boîtier. Il est également possible que les moyens de connexion concernant la transmission de données soient disposés sur le boîtier, notamment lorsque celui-ci incorpore l'interface de liaison correspondante.

Selon une caractéristique additionnelle du terminal informatique portable selon l'invention, le module constitue un cache de finition.

Dans une configuration minimum du terminal, le boîtier comporte les moyens de transmission tandis que le module ne constitue qu'un cache de finition n'incorporant aucun périphérique, mais comportant éventuellement des moyens de connexion.

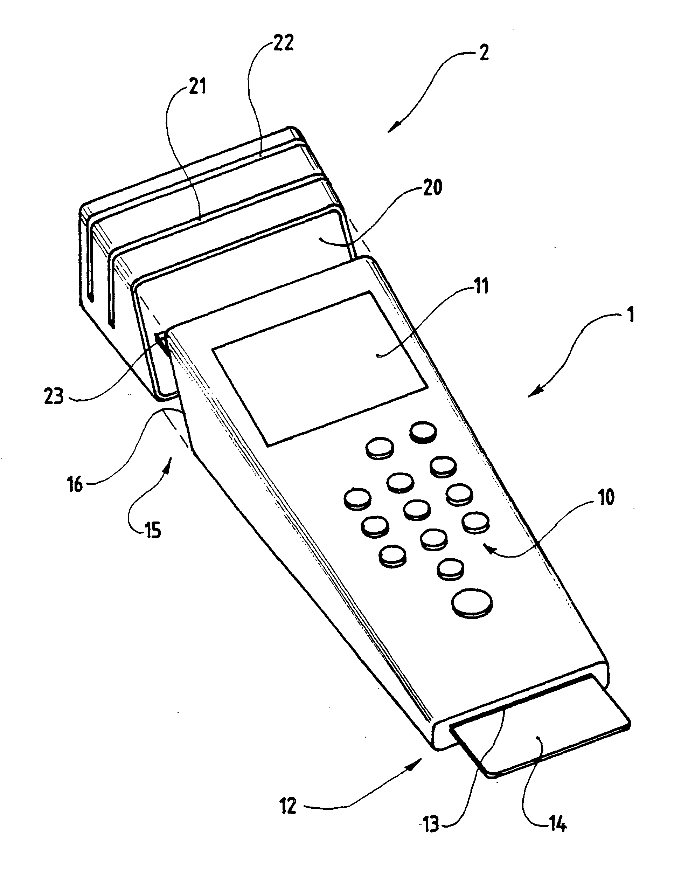

Les avantages et les caractéristiques du terminal informatique portable selon l'invention, ressortiront plus clairement de la description qui suit et qui se rapporte au dessin annexé, lequel en représente un mode de réalisation non limitatif.

Dans le dessin annexé la figure unique représente une vue schématique en perspective et en éclaté d'un terminal informatique portable de vente selon l'invention.

En référence à cette figure, on peut voir qu'un terminal informatique portable de vente selon l'invention comporte un boîtier 1 et un module 2.

Le boîtier 1 est de forme allongée, globalement parallélépipédique rectangle, sa face supérieure présente un clavier 10 et un écran d'affichage 11, tandis qu'une de ses extrémités 12, dite avant, est munie d'une fente transversale 13 permettant l'insertion d'une carte à puce 14 dans un lecteur, non visible, et que l'autre extrémité 15 comporte une face 16, dite arrière, destinée à l'accouplement avec le module 2.

Le module 2 est constitué d'un bloc comportant une face 20 destinée à venir au contact de la face 16, ces faces 20 et 16 étant munies de moyens de solidarisation, non représentés, qui peuvent consister en des moyens d'encliquetage tels que des ergots aptes à coopérer avec des cavités rétentrices.

Par ailleurs, le module 2 présente au voisinage de la face 20 une forme et des dimensions identiques à celles que présente le boîtier 1 au voisinage de la face 16, en sorte qu'après assemblage on ne puisse pas distinguer de manière évidente que le module 2 est rapporté sur le boîtier 1.

Le module 2 comporte également, dans le mode de réalisation représenté, deux fentes transversales 21 et 22, chacune associée à un périphérique, non visible, contenu dans le module 2 avec son moyen de gestion, et qui peut consister par exemple pour l'un en un lecteur de pistes CMC7 de chèques bancaires, et pour l'autre en un lecteur de cartes à piste magnétique.

Le module 2 comporte également un moyen de connexion électrique 23 permettant d'une part l'alimentation énergétique des périphériques, et d'autre la liaison entre les moyens de gestion des périphériques à la carte mère contenue dans le boîtier 1. En l'occurrence le moyen de connexion électrique 23 consiste en une carte module 23 faisant saillie de la face 20 et destinée à être enfichée dans une pratiquée dans la face 16.

On notera qu'il possible que les moyens de solidarisation et les moyens de connexion électrique n'en fassent qu'un, la carte module 23 présentant alors, par exemple, des moyens d'encliquetage.

De manière évidente, le module 2 comporte également un périphérique, non visible, de transmission des données tel qu'une interface de communication.

Il peut bien entendu comporter d'autres périphériques tels que des interfaces de communication de natures différentes, une unité d'impression, des ports de connexion.

Des modules différents par le périphérique ou la combinaison de périphériques qu'ils comportent, sont fabriqués, et sont assemblés chacun à un boîtier 1 en sorte de former un appareil différent.

Chacun des périphériques étant associé dans le module à son moyen de gestion, il n'est pas nécessaire d'encombrer d'origine la carte avec les moyens de gestion de tous les périphériques qu'il est possible de connecter au boîtier 1. Après adaptation du module au boîtier 1, il suffit de programmer la carte mère, à l'aide du clavier par exemple, pour qu'elle gère les différents moyens de gestion du ou des périphériques du module associé.

Le possesseur d'un terminal informatique portable, un commerçant par exemple, dispose ainsi d'un appareil répondant exactement à ses besoins, qui ne comporte pas de fonctions non utilisées, tout en bénéficiant des avantages d'un appareil construit de manière modulaire, c'est-à-dire, essentiellement, à un faible coût. Il dispose donc d'un appareil sur-mesure pour le coût d'un appareil bon marché.

## Revendications

1. Terminal informatique portable comportant un boîtier incorporant une carte mère et comprenant un clavier, un écran d'affichage et un lecteur de carte à puce, ledit boîtier (1) comportant d'une part des moyens de solidarisation permettant de lui adjoindre mécaniquement un module (2), ledit module pouvant incorporer un ou plusieurs périphériques (21, 22) ainsi que les moyens de gestion du ou desdits périphériques (21, 22), et d'autre part des moyens (23) de connexion permettant de relier ladite carte mère auxdits moyens de gestion, **caractérisé en ce que** ledit terminal est un terminal de vente pour la réalisation de transactions financières et commerciales, ledit module prolongeant ledit boîtier (1) matériellement, la forme et les dimensions du module (2) et celles du boîtier (1), au niveau des zones (20, 16) destinées à être aboutées, étant identiques.

2. Terminal informatique portable de vente selon la revendication 1, **caractérisé en ce que** les moyens de solidarisation d'un module (2) au boîtier (1) consistent en des moyens d'encliquetage.

3. Terminal informatique portable de vente selon l'une quelconque des revendications précédentes, **caractérisé en ce que** les moyens de connexion consistent en une carte périphérique module (23) apte à être enfichée dans un connecteur.

4. Terminal informatique portable de vente selon l'une quelconque des revendications précédentes, **caractérisé en ce que** le boîtier (1) est de forme allongée le lecteur de carte à puce comporte une fente (13), d'introduction d'une carte (14), s'ouvrant à l'extrémité avant (12) du boîtier (1) tandis que les moyens (23) solidarisation et de connexion du module (2) sont disposés à l'extrémité arrière (15).

5. Terminal informatique portable de vente selon l'une quelconque des revendications précédentes, **caractérisé en ce que** le module comporte des moyens de connexion, lesquels sont disposés à l'arrière dudit module.

6. Terminal informatique portable de vente selon l'une quelconque des revendications précédentes, **caractérisé en ce que** le module constitue un cache de finition.

## Claims

1. Handheld computer terminal comprising a casing incorporating a mother board and including a keyboard, a display screen and a chip card reader, said casing (1) comprising on the one hand joining means enabling a module (2) to be mechanically joined to it, said module being able to incorporate one or more peripheral devices (21, 22) and means of managing said peripheral device or devices (21, 22), and on the other hand, connection means (23) for linking said mother board to said management means, **characterized in that** said terminal is a sales terminal for carrying out financial and commercial transactions, said module being a material extension of said casing (1), the shape and the dimensions of the module (2) and those of the casing (1), in the areas (20, 16) designed to be joined together, being identical.

2. Handheld computer sales terminal according to Claim 1, **characterized in that** the means of joining a module (2) to the casing (1) consist of snap-fitting means.

3. Handheld computer sales terminal according to any one of the preceding claims, **characterized in that** the connection means consist of a module peripheral device card (23) suitable for plugging into a connector.

4. Handheld computer sales terminal according to any one of the preceding claims, **characterized in that** the casing (1) is of elongated shape, the chip card reader comprises a slot (13), for inserting a card (14), opening at the front end (12) of the casing (1), whereas the means (23) of joining and connecting the module (2) are disposed at the rear end (15).

5. Handheld computer sales terminal according to any one of the preceding claims, **characterized in that** the module comprises connection means, which are disposed at the rear of said module.

6. Handheld computer sales terminal according to any one of the preceding claims, **characterized in that** the module constitutes a finishing cover plate.

## Patentansprüche

1. Tragbares EDV-Terminal mit einem eine Mutterplatine enthaltenden Gehäuse, das eine Tastatur, einen Anzeigebildschirm und ein Chipkarten-Lesegerät aufweist, wobei das Gehäuse (1) einerseits Mittel zur festen Verbindung, die es ermöglichen, ihm mechanisch einen Modul (2) beizufügen, wobei der Modul ein oder mehrere Peripheriegeräte (21, 22) sowie die Verwaltungsmittel des oder der Peripheriegeräte (21, 22) enthalten kann, und andererseits Verbindungsmittel (23) aufweist, die es ermöglichen, die Mutterplatine mit den Verwaltungsmitteln zu verbinden, **dadurch gekennzeichnet, dass** das Terminal ein Verkaufsterminal zur Durchführung von finanziellen und kommerziellen Transaktionen ist, wobei der Modul das Gehäuse (1) materiell verlängert, wobei die Form und die Abmessungen des Moduls (2) und diejenigen des Gehäuses (1) in Höhe der Zonen (20, 16), die dazu bestimmt sind, zusammengefügt zu werden, gleich sind.

2. Tragbares EDV-Verkaufsterminal nach Anspruch 1, **dadurch gekennzeichnet, dass** die Mittel zur festen Verbindung eines Moduls (2) mit dem Gehäuse (1) aus Einrastmitteln bestehen.

3. Tragbares EDV-Verkaufsterminal nach einem der vorhergehenden Ansprüche, **dadurch gekennzeichnet, dass** die Verbindungsmittel aus einer Peripheriegerät-Modulkarte (23) bestehen, die ausgelegt ist, um in einen Verbinder eingesteckt zu werden.

4. Tragbares EDV-Verkaufsterminal nach einem der vorhergehenden Ansprüche, **dadurch gekennzeichnet, dass** das Gehäuse (1) eine längliche Form hat, das Chipkarten-Lesegerät einen Schlitz (13) zum Einführen einer Karte (14) aufweist, der sich am vorderen Ende (12) des Gehäuses (1) öffnet, während die Mittel (23) zur festen Verbindung und zur Verbindung des Moduls (2) am hinteren Ende (15) angeordnet sind.

5. Tragbares EDV-Verkaufsterminal nach einem der vorhergehenden Ansprüche, **dadurch gekennzeichnet, dass** der Modul Verbindungsmittel aufweist, die an der Rückseite des Moduls angeordnet sind.

6. Tragbares EDV-Verkaufsterminal nach einem der vorhergehenden Ansprüche, **dadurch gekennzeichnet, dass** der Modul eine Endabdeckung bildet.
